# EUROPEAN PATENT APPLICATION

(11) **EP 2 716 614 A1**
(43) Date of publication of application: **09.04.2014**
(21) Application number: 12006868.9
(22) Date of filing: 03.10.2012
(51) Int. Cl.: C03C 4/02, C03C 14/00

(54) **Colored glass and method for its manufacturing**

(71) Applicant: RC eNeM d.o.o., 1410 Zagorje ob Savi (SI)
(72) Inventor: Music, Branka, 1126 Ljubljana (SI); Nevenka, Rajnar, 1235 Radomlje (SI); Koritnik, Mateja, 1431 Dol pri Hrastniku (SI)
(74) Representative: Marn, Jure

(57) **Abstract**

Colored glass and method for its manufacturing solves technical problem of colored blown glass available in state of the art being rather difficult to transform and requiring special attention and extended handling at elevated temperature, these taxing workers and increasing cost of manipulation by adding of iron spinels such as ferrite materials nickel zinc ferrite (NiZnFe₂O₄), zinc copper ferrite (ZnCuFe2O4), copper ferrite (CuFe₂O₄) manganese ferrite (MnFe₂O₄) cobalt ferrite (CoFe₂O₄), manganese zinc ferrite (MnZnFe₂O₄), zinc ferrite (ZnFe₂O₄), and similar materials all commonly known as iron spinels, in the concentration range between 0.05 % (wt/wt) and 10 % (wt/wt) intended for the small-scale production of glass products of the highest quality upon customers' orders and with specific physical and chemical characteristics which enable glass-blowing and/or handcrafting of glass products.

## Description

### Technical field

Glass; colored glass; glass manufacturing

### Technical problem

Technical problem to be solved is enabling coloration of glass while keeping or increasing malleability of resulting glass in order to simply production of blown glass applications. Colored blown glass available in state of the art is rather difficult to transform and requires special attention and extended handling at elevated temperature, these taxing workers and increasing cost of manipulation.

It should be further noted that state of the art assumes painting of the glass, and that it inherently difficult to produce tinted glass, especially in darker shades such as blackish, purplish or bluish.

### State of the art

According to available and known literature the manufacture of colored transparent glass is implemented with the addition of dyes, which can be divided into two groups: molecular dyes and colloidal dyes.

### (a) Molecular dyes

This group comprises dyes with color particles in the form of atoms or molecules. When applying such dyes we can use random glass as the basis, while melting must be carried out in an oxidation atmosphere. The color intensity depends on the quantity of the added dye and the thickness of the glass layer.

The following compounds can be used as molecular dyes:

### - Manganese oxide

Manganese (III) oxide (Mn₂O₃) colors the glass purple. In standard sodium-potassium glass the content of 0.1 % Mn₂O₃ results in a slightly purple shade. If we want the color to be sufficiently intense the glass must contain approximately 1% Mn₂O₃.

### - Cobalt oxide

Cobalt oxide gives the glass a blue color with a specific shade; however it depends on the glass composition. For example cobalt oxide (CoO) gives sodium-potassium glass a blue color with a red shade. The intensity of coloring with CoO is very high, since the presence of a mere 0.001% CoO suffices for the coloring of thicker products. With a higher presence of CoO the glass becomes increasingly purple. Glass which comprises approximately 5% appears black.

### - Copper oxide

Copper oxide and copper (II) oxide (CuO) are also used for coloring glass. CuO gives glass a blue color; however its intensity is about 10 times lower than that of the cobalt oxide.

### - Chromium oxide

Glass can be colored using chromium (III) oxide (Cr₂O₃) and chromium (VI) oxide (CrO₃). While chromium gives glass a green color, the green color of hexavalent chromium has a strong yellow shade. The balance between trivalent and hexavalent chromium depends on the melting temperature, atmosphere and glass composition. The intensity of color with chromium is slightly lower than that of cobalt; nevertheless, a mere 0.05% Cr₂O₃ gives glass a noticeable color. Glass with 0.1% Cr₂O₃ has a nice green color: at about 0.5% the color is similar to the color of moss, whereby it becomes increasingly dark with additional quantity. The highest limit of Cr₂O₃ additions is at 3%, as more cannot be dissolved in glass.

### - Sulphur oxide

Sulphur can only be used to color glass with the parallel use of reducents. We acquire yellowish colored glass as a result. However, if the process is carried out in the oxidation atmosphere, we get colorless glass, since the sulphur escapes from the furnace in the form of SO₂. Sulphur can also be introduced with the application of iron sulphur while also adding reducent agents. Alternatively, it can also be introduced with sulphates (Na₂SO₄), although this requires a higher quantity of reducing agents. Milled coal or graphite can be used as the reducent.

### - Selenium

Selenium gives glass a purple color, which is especially intense and clear if BaO is present as the bivalent oxide. It is recommended that we use K₂O as the alkaline oxide, since glass with Na₂O has a slightly yellowish shade.

### (b) Colloidal dyes

With colloidal dyes the atoms and/or molecules of dying agents are joined into microcrystals of colloidal size. This size is the prerequisite for a suitable color, since glass won't become colored otherwise. We also do not get a suitable color if the particles are too big. If we want to use these types of dyes to color glass, the glass must be of specific composition, while the melting process must be carried out in an oxidation or reduction atmosphere depending on the specific type of dye. The intensity of the color depends on the share of the added dye that has been successfully transformed into crystals of the suitable size.

If we use colloidal dyes to color glass, the color is developed during the reheating of slightly cooled glass. Most often cooled glass, which contains these dyes, is colorless. With reheating the movement of particles and aggregation occurs, whereby particles of the size from 10⁻⁶ to 10⁻⁵ mm are created.

### - Glass colored with colloidal dispersion metals

These types of glass contain colloidal solutions of metals from the I.a group of the periodic table; i.e. colloidal copper, silver and gold. The glass colored by these metals always contains SnO₂, which does not color the glass by itself, but it is required for achieving the color purity. The technology of preparation of glass colored by these dyes is slightly different from the preparation of other types of glass. It can be briefly summarised as follows: metals are introduced into glass in the form of various compounds (e.g. Cu₂O and CuO when we use copper; AgNO₃ when we use silver). If we use colloidal gold to color glass, we must add oxidants to the mixture; however, if we use copper, a reducent must be present. In any event we must add SnO₂, which functions as the protective colloidal. Without the SnO₂ the particles would have larger dimensions and would consequently result in blurry glass. In order to accelerate the growth of metal particles to colloidal size we also add some Fe₂O₃. In glass with more iron the colors develop faster. Upon the completion of melting these types of glass are colorless. Therefore, we must reheat the manufactured product to a specific temperature. The color will develop only after reheating and it will result in dark red (if copper is used), brown (if silver is used) or scarlet (if gold is used) glass.

### - Glass colored with cadmium sulphide and selenide

This type of glass is colored yellow, orange or red; depending on the ratio between the cadmium sulphide (CdS) and the cadmium selenide (CdSe). CdS and CdSe, which give the color to the glass, have a similar crystal structure and thus produce the same type of compound. The glass containing only CdS will be colored distinctly yellow. Each addition of cadmium therefore changes the color towards red. Consequently, the glass becomes dark red at the CdS / CdSe ratio 1:10.

A typical characteristic of this glass is that it must contain ZnO, since without its presence we cannot get this type of glass. The addition of ZnO is proportionate (from 8 to 15%). The addition of CdS is between 0.8 and 2.5%, while Se is added depending on the desired color (yellow without red - approximately half of the quantity of the added CdS).

### Description of new invention

The above referenced technical problem is solved by colored glass and method for its manufacturing by adding of iron spinels such as ferrite materials nickel zinc ferrite (NiZnFe₂O₄), zinc copper ferrite (ZnCuFe2O4), copper ferrite (CuFe₂O₄) manganese ferrite (MnFe₂O₄) cobalt ferrite (CoFe₂O₄), manganese zinc ferrite (MnZnFe₂O₄), zinc ferrite (ZnFe₂O₄), and similar materials commonly known as iron spinels, in the concentration range between 0.05 % (wt/wt) and 10 % (wt/wt) intended for the small-scale production of glass products of the highest quality upon customers' orders and with specific physical and chemical characteristics which enable glass-blowing and/or handcrafting of glass products.

The basic characteristics of transparent glass colored with iron spinels are defined by the following characteristics of glass: color (which is more intensive than state of the art), density, softening point temperature (which is lower than state of the art) and the linear extension coefficient. These characteristics are adjusted to suit the manufacturing requirements, glass-blowing requirements, requirements for specific products in the decorative glass industry and the requirements in the field of ecology and environmental protection. These characteristic of glass colored with iron spinels enable easier transformation and lower physical efforts of workers blowing glass.

The effective use of the basic characteristics of transparent glass colored with iron spinels is possible due to the adjusted basic procedure for the manufacture of transparent glass and the concentration of iron spinels in the basic procedure for the production of transparent glass.

The invention refers to the applied raw materials and chemical structure and the production procedure for the manufacture / blowing of glass products.

According to the invention the problem is solved with the synthesis and the chemical structure of the colored glass and the procedure for blowing colored glass.

The glass according to this invention comprises one or more constituents with at least one chosen from the following list:
- silica sand(SiO₂) in the concentration range essentially between 40 % (wt/wt) and 80 % (wt/wt) ;
- soda ash (Na₂CO₃) in the concentration range essentially between 15 % (wt/wt) and 35% (wt/wt) ;
- potassium carbonate (K₂CO₃) in the concentration range essentially between 1 % (wt/wt) and 5 % (wt/wt) ;
- limestone (CaCO₃) in the concentration range essentially between 2 % (wt/wt) and 10 % (wt/wt) ;
- dolomite (CaCO₃ x MgCO₃) in the concentration range essentially between 2 % (wt/wt) and 10 % (wt/wt) ;
- barium carbonate (BaCO₃) in the concentration range essentially between 0.1 % (wt/wt) and 5 % (wt/wt) ;
- sodium nitrate (NaNO₃) in the concentration range essentially between 0.05 % (wt/wt) and 5 % (wt/wt) ;
- sodium sulfate (Na₂SO₄) in the concentration range essentially between 0.1 % (wt/wt) and 5 % (wt/wt) ;
- sodium antimonate (NaSbO₃) in the concentration range essentially between 0.1 % (wt/wt) and 0.5 % (wt/wt)

Further, to achieve desired properties iron spinel is added to the mixture in the concentration range essentially between 0.05 % (wt/wt) and 10 % (wt/wt).

Said iron spinel prepared according to the classic ceramic procedure with iron spinel synthesis through the application of metal oxides, which includes the weighing of iron oxides, manganese, nickel, copper, cobalt and dry homogenization in a cylinder homogenizer, calcination at a temperature from 800°C to 1100°C in the atmosphere, milling in a horizontal attritor a milling machine at the speed of 1,100 rpm and with a milling time from 60 to 240 minutes, drying in a classic dryer;

The glass is manufactured using steps comprising:
- homogenization of all input raw materials in a paddle mixer with a time of mixing from 1 to 10 minutes;
- gradual introduction of the homogenized material in a daily tank furnace where it is melted at a temperature from 1380°C to 1480°C for 10 to 24 hours;
- formation of the end-product with blowing; and
- the final phase of production comprising mechanical stress relieving in a annealing lehr at a temperature between 520°C and 560°C, and cooling to room-temperature.

The preferred ratios between specific components and the relevant synthesis process parameters are described below in the implementation cases which show the best modes of carrying cut the invention, however, they are not exclusive and are shown in the way of example for achieving blackish, purplish, and bluish color of the glass.

### IMPLEMENTATION CASE No. 1:

For this implementation the following base mixture is used: silica sand (SiO₂) in the range 40 % (wt/wt) to 60 % (wt/wt), preferably approximately 50 % (wt/wt), sodium (Na₂CO₃) in the range 20 % (wt/wt) to 40 % (wt/wt), preferably approximately 30 % (wt/wt), soda ash (K₂CO₃) in the range 1 % (wt/wt) to 8 % (wt/wt), preferably approximately 4 % (wt/wt), limestone (CaCO₃) in the range 2 % (wt/wt) to 9 % (wt/wt), preferably approximately 5 % (wt/wt), dolomite (CaCO₃ x MgCO₃) in the range 3 % (wt/wt) to 10 % (wt/wt), preferably approximately 6 % (wt/wt), barium carbonate (BaCO₃) in the range 0,3 % (wt/wt) to 3,0 % (wt/wt), preferably approximately 1,9 % (wt/wt), sodium nitrate (NaNO₃) in the range 0,3 % (wt/wt) to 3,9 % (wt/wt), preferably approximately 2,5 % (wt/wt), sodium sulfate (Na₂SO₄) in the range 0,1 % (wt/wt) to 0,9 % (wt/wt), preferably approximately 0,5 % (wt/wt), sodium antimonate (NaSbO₃) in the range 0,05 % (wt/wt) to 2,0 % (wt/wt), preferably approximately 0,1 % (wt/wt). To this appropriate iron spinel to produce blackish color of the glass was added.

In order to produce the black(ish) color of transparent glass we prepare an iron spinel nickel-zinc-ferrite composite (NiZnFe₂O₄) in the range 0,5 % (wt/wt) to 10 % (wt/wt), preferably approximately 5 % (wt/wt) according to the classic ceramic procedure. We add 3.92 kg of iron oxide (99.38% purity), 1.51 kg ZnO (99.6% purity) and 0.61 kg NiO (98.5% purity) into a mixing container and we mix and/or homogenize the iron oxides for 60 minutes. The homogenized mixture is calcinated in a chamber furnace at the temperature of 1000°C for 90 minutes. We mill the calcinate in a horizontal attritor miller for 70 minutes with the ratio of 40 wt. % calcinate and 60 % (wt/wt) water at the speed of 1100 rpm and pump speed of 150 rpm. The resulting mixture is then dried until completely dry.

The mixture components' ratios for the manufacture of transparent glass are as follows: 50 % (wt/wt) silica sand (SiO₂), 30 % (wt/wt) sodium (Na₂CO₃), 4 % (wt/wt) soda ash (K₂CO₃), 5 % (wt/wt) limestone (CaCO₃), 6 % (wt/wt) dolomite (CaCO₃ x MgCO₃), 1.9 % (wt/wt) barium carbonate (BaCO₃), 2.5 % (wt/wt) sodium nitrate (NaNO₃), 0.5 % (wt/wt) sodium sulphate (Na₂SO₄), 0.1 % (wt/wt) sodium antimonate (NaSbO₃). The mixture is mixed in a paddle mixer for 15 minutes, after which we add 5 % (wt/wt) of the prepared nickel zinc ferrite spinel and homogenize the mixture for an additional 15 minutes.

We heat up a daily tank furnace to 1430°C and gradually add the homogenized mixture. The glass is melted at a maximum temperature of 1430°C for 16 hours. Upon the completed melting the glass-blower takes the melted glass and forms/blows the desired product.

The invention solves the problem by specifying the density of the colored glass, temperature of the softening point of the colored glass, and the color shade, which allow high-quality handcrafting or blowing of glass due to the preserved initial characteristics of transparent glass.

**Table 1. Physical properties of glass - IMPLEMENTATION CASE No. 1:**

| **Density [g/cm³]** | **Softening point [°C]** | **Color** |
|---|---|---|
| **Standard: ASTM C729-75(2000)** | **Standard: ASTM C338 - 93(2008)** | |
| **Standard Test Method for Density of Glass by the Sink-Float Comparator** | **Standard Test Method for Softening Point of Glass** | |
| **2.5109 ± 0.002** | **673 ± 3** | **Blackish** |

### IMPLEMENTATION CASE No. 2:

For this implementation the following base mixture is used: silica sand (SiO₂) in the range 40 % (wt/wt) to 60 % (wt/wt), preferably approximately 50 % (wt/wt), sodium (Na₂CO₃) in the range 20 % (wt/wt) to 40 % (wt/wt), preferably approximately 30 % (wt/wt), soda ash (K₂CO₃) in the range 1 % (wt/wt) to 8 % (wt/wt), preferably approximately 4 % (wt/wt), limestone (CaCO₃) in the range 2 % (wt/wt) to 9 % (wt/wt), preferably approximately 5 % (wt/wt), dolomite (CaCO₃ x MgCO₃) in the range 3 % (wt/wt) to 10 % (wt/wt), preferably approximately 6 % (wt/wt), barium carbonate (BaCO₃) in the range 0,3 % (wt/wt) to 3,0 % (wt/wt), preferably approximately 1,9 % (wt/wt), sodium nitrate (NaNO₃) in the range 0,3 % (wt/wt) to 3,9 % (wt/wt), preferably approximately 2,5 % (wt/wt), sodium sulfate (Na₂SO₄) in the range 0,1 % (wt/wt) to 0,9 % (wt/wt), preferably approximately 0,5 % (wt/wt), sodium antimonate (NaSbO₃) in the range 0,05 % (wt/wt) to 2,0 % (wt/wt), preferably approximately 0,1 % (wt/wt). To this appropriate iron spinel to produce purplish color of the glass was added.

In order to color transparent glass purple (purplish), we prepare an iron spinel manganese ferrite composite (MnFe₂O₄) in the range 0,1 % (wt/wt) to 10 % (wt/wt), preferably approximately 0,5 % (wt/wt) according to the classic ceramic procedure. We add 0.301 kg of iron oxide (99.38% purity) and 1.85 kg of manganese (II, III) oxide (91.98% purity) into a mixing container and mix and/or homogenise the metal oxides for preferably approximately 60 minutes. The homogenized mixture is calcinated in a chamber furnace at the temperature of 950°C for 60 minutes. The calcinate is milled in a horizontal attritor mill for 80 minutes with the calcinate / water ratio of 40 % (wt/wt) /60 % (wt/wt) and the speed of 1,100 rpm, as well as the pump speed of 150 rpm. The resulting mixture is then dried until completely dry.

The mixture of components for the manufacture of transparent glass is as follows: 50 % (wt/wt) silica (SiO₂), 30 % (wt/wt) sodium (Na₂CO₃), 4 wt. % potassium carbonate (K₂CO₃), 5 % (wt/wt) calcite (CaCO₃), 6 % (wt/wt) dolomite (CaCO₃ x MgCO₃), 1.9 % (wt/wt) barium carbonate (BaCO₃), 2.5 % (wt/wt) sodium nitrate (NaNO₃), 0.5 % (wt/wt) sodium sulfate (Na₂SO₄), 0.1 % (wt/wt) sodium antimonate (NaSbO₃). The components are mixed in a paddle mixer for a period 8 to 28 minutes preferably approximately 15 minutes, after which we add 0.5 % (wt/wt) of the prepared manganese ferrite (MnFe₂O₄) spinel and homogenize it for preferably approximately 15 minutes. We heat up a daily tank furnace to 1420°C and gradually add the homogenized mixture. The glass is melted at a maximum temperature of 1420°C for 10 to 18 hours preferably approximately 14 hours. Upon the completed melting the glass-blower takes the melted glass and forms/blows the desired product.

The invention solves the problem by specifying the density of the colored glass, temperature of the softening point of the colored glass, and the color shade, which allow high-quality handcrafting or blowing of glass due to the preserved initial characteristics of transparent glass.

**Table 2 - Physical properties of glass - IMPLEMENTATION CASE No. 2:**

| **Density [g/cm³]** | **Softening point [°C]** | **Color** |
|---|---|---|
| **Standard: ASTM C729-75(2000)** | **Standard: ASTM C338 - 93(2008)** | |
| **Standard Test Method for Density of Glass by the Sink-Float Comparator** | **Standard Test Method for Softening Point of Glass** | |
| **2.5119 ± 0.002** | **674 ± 3** | **Purplish** |

### IMPLEMENTATION CASE No. 3:

or this implementation the following base mixture is used: silica sand (SiO₂) in the range 40 % (wt/wt) to 60 % (wt/wt), preferably approximately 50 % (wt/wt), sodium (Na₂CO₃) in the range 20 % (wt/wt) to 40 % (wt/wt), preferably approximately 30 % (wt/wt), soda ash (K₂CO₃) in the range 1 % (wt/wt) to 8 % (wt/wt), preferably approximately 4 % (wt/wt), limestone (CaCO₃) in the range 2 % (wt/wt) to 9 % (wt/wt), preferably approximately 5 % (wt/wt), dolomite (CaCO₃ x MgCO₃) in the range 3 % (wt/wt) to 10 % (wt/wt), preferably approximately 6 % (wt/wt), barium carbonate (BaCO₃) in the range 0,3 % (wt/wt) to 3,0 % (wt/wt), preferably approximately 1,9 % (wt/wt), sodium nitrate (NaNO₃) in the range 0,3 % (wt/wt) to 3,9 % (wt/wt), preferably approximately 2,5 % (wt/wt), sodium sulfate (Na₂SO₄) in the range 0,1 % (wt/wt) to 0,9 % (wt/wt), preferably approximately 0,5 % (wt/wt), sodium antimonate (NaSbO₃) in the range 0,05 % (wt/wt) to 2,0 % (wt/wt), preferably approximately 0,1 % (wt/wt). To this appropriate iron spinel to produce bluish color of the glass was added.

In order to color transparent glass blue(ish), we prepare an zinc copper ferrite spinel (ZnCuFe₂O₄) in the range 0,05 % (wt/wt) to 10 % (wt/wt), preferably approximately 0,2 % (wt/wt) according to the classic ceramic procedure. We add 0.59 kg of iron oxide (99.38% purity), 0.25 kg of zinc oxide (99.6% purity) and 0.1 kg of copper (I) oxide, after which we mix and/or homogenize the metal oxides for 60 minutes. The homogenized mixture is calcinated in a chamber furnace at the temperature of 900 °C for 60 minutes. The calcinate is milled in a horizontal attritor mill for 120 minutes with the calcinate / water ratio of 40 % (wt/wt) / 60 % (wt/wt) and the milling speed of 1,100 rpm and pump speed of 150 rpm. The resulting mixture is dried until completely dry.

The mixture of components for the manufacture of transparent glass is as follows: 50 % (wt/wt) silica (SiO₂), 30 % (wt/wt) sodium (Na₂CO₃), 4 % (wt/wt) potassium carbonate (K₂CO₃), 5 % (wt/wt) calcite (CaCO₃), 6 % (wt/wt) dolomite (CaCO₃ x MgCO₃), 1.9 % (wt/wt) barium carbonate (BaCO₃), 2.5 % (wt/wt) sodium nitrate (NaNO₃), 0.5 % (wt/wt) sodium sulphate (Na₂SO₄), 0.1 % (wt/wt) sodium antimonate (NaSbO₃). The components are mixed in a paddle mixer for preferably approximately 15 minutes, after which we add approximately 0.2 wt. % of the prepared ZnCuFe₂O₄ spinel and homogenize it for preferably approximately 15 minutes.

We heat up a daily tank furnace to 1440°C and gradually add the homogenized mixture. The glass is melted at a maximum temperature of 1440°C for 16 hours. Upon the completed melting the glass-blower takes the melted glass and forms/blows the desired product.

The invention solves the problem by specifying the density of the colored glass, temperature of the softening point of the colored glass, and the color shade, which allow high-quality handcrafting or blowing of glass due to the preserved initial characteristics of transparent glass.

**Table 3 - Physical properties of glass - IMPLEMENTATION CASE No. 3:**

| **Density [g/cm³]** | **Softening point [°C]** | **Color** |
|---|---|---|
| **Standard: ASTM C729-75(2000)** | **Standard: ASTM C338 - 93(2008)** | |
| **Standard Test Method for Density of Glass by the Sink-Float Comparator** | **Standard Test Method for Softening Point of Glass** | |
| **2.5106 ± 0.002** | **673 ± 3** | **bluish** |

## Claims

1. Colored glass comprising silica sand(SiO₂) in the concentration range essentially between 40 % (wt/wt) and 80 % (wt/wt), limestone (CaCO₃) in the concentration range essentially between 2 % (wt/wt) and 10 % (wt/wt), dolomite (CaCO₃ x MgCO₃) in the concentration range essentially between 2 % (wt/wt) and 10 % (wt/wt), barium carbonate (BaCO₃) in the concentration range essentially between 0.1 % (wt/wt) and 5 % (wt/wt), **characterized in that** it further comprises at least one iron spinel in the total concentration range essentially between 0.05 % (wt/wt) and 10 % (wt/wt).

2. Colored glass according to claim 1 wherein said iron spinel comprises at least one member of the following group: nickel zinc ferrite (NiZnFe₂O₄), zinc copper ferrite (ZnCuFe2O4), copper ferrite (CuFe₂O₄) manganese ferrite (MnFe₂O₄) cobalt ferrite (CoFe₂O₄), manganese zinc ferrite (MnZnFe₂O₄), zinc ferrite (ZnFe₂O₄).

3. Colored glass according to claim 1 wherein one or more components is chosen from the group comprising soda ash (Na₂CO₃) in the concentration range essentially between 15 % (wt/wt) and 35 % (wt/wt), potassium carbonate (K₂CO₃) in the concentration range essentially between 1 % (wt/wt) and 40 % (wt/wt), sodium nitrate (NaNO₃) in the concentration range essentially between 0.05 % (wt/wt) and 5 % (wt/wt) , sodium sulfate (Na₂SO₄) in the concentration range essentially between 0.1 % (wt/wt) and 5 % (wt/wt), sodium antimonate (NaSbO₃) in the concentration range essentially between 0.1 % (wt/wt) and 0.5 % (wt/wt).

4. Colored glass according to claim 1 or claim 2 wherein silica sand (SiO₂) is in the range 40 % (wt/wt) to 60 % (wt/wt), preferably approximately 50 % (wt/wt), sodium (Na₂CO₃) is in the range 20 % (wt/wt) to 40 % (wt/wt), preferably approximately 30 % (wt/wt), soda ash (K₂CO₃) is in the range 1 % (wt/wt) to 8 % (wt/wt), preferably approximately 4 % (wt/wt), limestone (CaCO₃) is in the range 2 % (wt/wt) to 9 % (wt/wt), preferably approximately 5 % (wt/wt), dolomite (CaCO₃ x MgCO₃) is in the range 3 % (wt/wt) to 10 % (wt/wt), preferably approximately 6 % (wt/wt), barium carbonate (BaCO₃) is in the range 0,3 % (wt/wt) to 3,0 % (wt/wt), preferably approximately 1,9 % (wt/wt), sodium nitrate (NaNO₃) is in the range 0,3 % (wt/wt) to 3,9 % (wt/wt), preferably approximately 2,5 % (wt/wt), sodium sulfate (Na₂SO₄) is in the range 0,1 % (wt/wt) to 0,9 % (wt/wt), preferably approximately 0,5 % (wt/wt), sodium antimonate (NaSbO₃) is in the range 0,05 % (wt/wt) to 2,0 % (wt/wt), preferably approximately 0,1 % (wt/wt).

5. Colored glass according to claim 4 wherein said iron spinel is chosen from the group comprising nickel zinc ferrite (NiZnFe₂O₄) to achieve blackish color of glass, in concentration in the range 0.5 % (wt/wt) to 10 % (wt/wt), preferably approximately 5 % (wt/wt).

6. Colored glass according to claim 4 wherein said iron spinel is chosen from the group comprising manganese ferrite (MnFe₂O₄) to achieve purplish color of glass, in concentration in the range 0.1 % (wt/wt) to 10 % (wt/wt), preferably approximately 0.5 % (wt/wt).

7. Colored glass according to claim 4 wherein said iron spinel is chosen from the group comprising zinc copper ferrite (ZnCuFe2O4), to achieve bluish color of glass, in concentration in the range 0.05 % (wt/wt) to 10 % (wt/wt), preferably approximately 0.2 % (wt/wt).

8. Process for the manufacturing of color glass comprising preparation of iron spinel using iron spinel synthesis through the application of metal oxides, which includes the weighing of at least two constituents chosen from the group of: iron oxides, manganese, nickel, copper, cobalt, further dry homogenization in a cylinder homogenizer, calcination at a temperature from 800°C to 1100°C in the atmosphere, milling in a horizontal attritor a milling machine at the speed of 1,100 rpm and with a milling time from 60 to 240 minutes, drying in a classic dryer.

9. Process according to claim 8 comprising further steps
- homogenization of all input raw materials in a paddle mixer with a time of mixing essentially in the range 1 to 30 minutes, preferably in the range 1 to 20 minutes;
- gradual introduction of the homogenized material in a daily tank furnace where it is melted at a temperature essentially in the range 1380°C to 1480°C for 10 to 24 hours;
- formation of the end-product with blowing;
- mechanical stress relieving in a annealing lehr at a temperature essentially in the range 520°C and 560°C;
- cooling to room-temperature.

10. Process according to any of claims 8 or 9 wherein components of colored glass according to claim 4 are mixed for a period 8 to 28 minutes preferably approximately 15 minutes after which iron spinel is added, and homogenized for a period 8 to 28 minutes preferably approximately 15 minutes, and further, furnace is heated to a temperature range 1.380 to 1.430 °C preferably approximately 1.430°C, and homogenized mixture is gradually added, and further heated at temperatures not to exceed 1.430°C for 10 to 20 hours preferably approximately 16 hours.

11. Process according to any of claims 8 or 9 wherein components of colored glass according to claim 4 are mixed for a period 8 to 28 minutes preferably approximately 15 minutes after which iron spinel is added, and homogenized for a period 8 to 28 minutes preferably approximately 15 minutes, and further, furnace is heated to a temperature range 1.380 to 1.420 °C preferably approximately 1.420°C, and homogenized mixture is gradually added, and further heated at temperatures not to exceed 1.420°C for 10 to 18 hours preferably approximately 14 hours.

12. Process according to any of claims 8 or 9 wherein components of colored glass according to claim 4 are mixed for a period 8 to 28 minutes preferably approximately 15 minutes after which iron spinel is added, and homogenized for a period 8 to 28 minutes preferably approximately 15 minutes, and further, furnace is heated to a temperature range 1.380 to 1.440 °C preferably approximately 1.440°C, and homogenized mixture is gradually added, and further heated at temperatures not to exceed 1.420°C for 10 to 20 hours preferably approximately 16 hours.
